# EUROPEAN PATENT APPLICATION

(11) **EP 4 180 850 A1**
(43) Date of publication of application: **17.05.2023**
(21) Application number: 21838281.0
(22) Date of filing: 02.07.2021
(51) Int. Cl.: G02B 6/44

(54) **OPTICAL FIBER TAPE CORE WIRE AND OPTICAL FIBER CABLE**

(30) Priority: 10.07.2020 JP 2020119436
(71) Applicant: FURUKAWA ELECTRIC CO., LTD., Chiyoda-ku Tokyo 100-8322 (JP)
(72) Inventor: YASUTOMI, Tetsuya, Tokyo 100-8322 (JP)
(74) Representative: Goddar, Heinz J.
(86) International application number: PCT/JP2021/025149
(87) International publication number: WO 2022/009798

(57) **Abstract**

An optical fiber tape core wire (3) is configured by arranging in parallel and coupling a plurality of single-core optical fibers (4). The optical fibers (4) adjacent to each other are intermittently bonded by coupling parts (19) at predetermined intervals in the longitudinal direction of the optical fiber tape core wire (3). The coupling parts (19) adjacent to each other in the width direction are disposed to be displaced from each other in the longitudinal direction of the optical fiber tape core wire (3). In the optical fiber tape core wire (3), the adjacent optical fibers (4) are intermittently coupled by the coupling parts (19) in the longitudinal direction, and the amounts of resin of the coupling parts (14) are not uniform in the longitudinal direction of the optical fibers (4). Moreover, the Young's modulus of resin constituting the coupling part (19) is preferably 130 MPa or less, and more preferably 80 MPa or less.

## Description

### TECHNICAL FIELD OF THE INVENTION

The present invention relates to an optical fiber tape core wire with small transmission loss, and the like.

### BACKGROUND OF THE INVENTION

As an optical fiber for high-speed transmission of large capacity data, an optical fiber tape core wire has been used to facilitate operations and accommodation in a cable. The optical fiber tape core wire includes a plurality of optical fibers that are arranged side by side in parallel and bonded to each other. In the optical fiber tape core wire, optical fibers arranged side by side are fixed with resin over an entire length thereof in some cases, and, in other cases, optical fibers are bonded to each other intermittently in a longitudinal direction (Patent Document 1, for example).

Also, for manufacturing such the optical fiber tape core wire, there is a method in which resin is pushed out from a roller applicator having a plurality of application holes so that bonding resin can be applied into spaces between optical fibers (Patent Document 2, for example).

### RELATED ART

### PATENT DOCUMENTS

[Patent Document 1] Japanese Unexamined Patent Application Publication No. 2010-8923 (JP-A-2010-8923)
[Patent Document 2] Japanese Unexamined Patent Application Publication No. 2016-80849 (JP-A-2016-80849)

### SUMMARY OF THE INVENTION

### (PROBLEMS TO BE SOLVED BY THE INVENTION)

The method described in Patent Document 2 uses a roller applicator. The roller applicator is a hollow roller having a plurality of application holes formed on an outer periphery surface thereof. The application hole is not one long continuous hole, for example, but is formed of a plurality of small holes that are aligned in a row along a circumferential direction. The application hole connects a space inside the roller applicator through to the outside.

Bonding resin is continuously supplied into the roller applicator. A die is provided inside the roller applicator. By rolling the roller applicator, the bonding resin held on an inner surface of the roller applicator is pressed into a gap between the die and the inner surface of the roller applicator. When the application hole is positioned on an outer periphery side of the die, the die pushes the bonding resin out of the application hole to the outside.

The bonding resin pushed out of the application hole is then applied into spaces between optical fibers that are fed being in contact with the roller applicator. At this time, the bonding resin applied from an upper part of the optical fibers flows down to a lower part side of the optical fibers due to force such as gravity and surface tension. Accordingly, the bonding resin is applied onto both sides of the optical fibers. When the optical fibers are arranged side by side and the bonding resin is applied on one side of the optical fibers as above, the bonding resin flows into the spaces between the optical fibers and goes around to the other side. This can make certain that the optical fibers are joined with each other.

The optical fibers that have passed under the roller applicator are then irradiated with ultraviolet light, for example, to cure the bonding resin applied by the roller applicator. Accordingly, an optical fiber tape core wire is manufactured.

However, in the above method, there is a difference between an amount of resin applied on an upper surface of the optical fibers and an amount of resin applied on a lower surface of the optical fibers. The bonding resin contracts in volume when being cured by ultraviolet light. Thus, the difference in the amounts of bonding resin between the upper and lower surfaces of the optical fiber tape core wire may lead to a difference in amounts of contraction of the resin. When the surface side with the larger amount of bonding resin contracts more, the optical fiber tape core wire receives a bending force.

Also, if the bonding resin is applied into the space between the optical fibers by pushing out the bonding resin from the roller applicator having the application holes, the amount of applied bonding resin is not uniform and is uneven in a longitudinal direction of a coupling part. If the amount of applied bonding resin is uneven as above, the amount of contraction is also uneven in the longitudinal direction of the coupling part, which may cause the bending force.

On the other hand, optical fibers categorized in ITU-T (International Telecommunication Union Telecommunication Standardization Sector) G.657 have been used for conventional optical fiber cables. Such optical fibers have a small increase in loss when being bent, and thus there is little influence of the above-mentioned bending force and deterioration in transmission loss is small.

In contrast, optical fibers categorized in ITU-T G.652, which are relatively at low cost, or those categorized in ITU-T G.654.E, which enable long distance transmission and have large core diameters, experience relatively a larger increase in transmission loss when being bent. Thus, using such the optical fibers raises a problem of an increase in transmission loss due to the above-mentioned bending force.

The present invention is made in view of the above problems. It is an object of the present invention to provide an optical fiber tape core wire and the like that can suppress an increase in loss when using optical fibers that experience a relatively larger increase in transmission loss when being bent.

### (MEANS FOR SOLVING PROBLEMS)

To achieve the above object, a first aspect of the present invention is an optical fiber tape core wire including a plurality of optical fibers that are arranged side by side and coupled to each other. The plurality of optical fibers adjacent to each other are intermittently coupled by coupling parts in a longitudinal direction. Amounts of resin of the coupling parts are not uniform in the longitudinal direction of the optical fibers, and Young's modulus of the resin of the coupling parts is 130 MPa or less.

The Young's modulus of the resin of the coupling parts is more preferably 80 MPa or less.

The adjacent optical fibers may be coupled at the coupling parts with the resin from both upper and lower surfaces of the optical fiber tape core wire.

The amounts of the resin on the upper and lower surfaces of the optical fiber tape core wire may be formed unevenly at the coupling parts.

The amounts of the resin at the coupling parts are periodical but may not be uniform in the longitudinal direction of the plurality of optical fibers.

Each of the coupling parts includes a plurality of small bonding portions, and the plurality of small bonding portions may be joined continuously with each other.

According to the first aspect of the present invention, Young's modulus of the resin of the coupling parts is deliberately made smaller. This can reduce influence of bending stress, which is applied to the optical fibers and is caused by unevenness of the amounts of contraction of the resin at different parts. Thus, low-cost optical fibers can be utilized.

A second aspect of the present invention is an optical fiber cable in which the optical fiber tape core wire according to the first aspect of the present invention is used. The optical fiber cable includes a cable core formed of a plurality of the optical fiber tape core wires that are twisted together, and an outer sheath that is provided to coat the cable core.

It is preferable that a maximum transmission loss at a wavelength of 1550 nm is less than 0.27 dB/km.

The plurality of optical fibers may be categorized in ITU-T G.654.E.

According to the second aspect of the present invention, it is possible to suppress an increase in loss, which is caused by unevenness of the amounts of contraction of the resin of the coupling parts at different parts. Thus, it is possible to utilize relatively low-cost optical fibers as well as optical fibers that enable further long-distance transmission.

In particular, even if the optical fibers categorized in ITU-T G.654.E that experience a large increase in transmission loss when being bent are used, the maximum transmission loss at a wavelength of 1550 nm can be less than 0.27 dB/km.

### (EFFECTS OF THE INVENTION)

The present invention can provide an optical fiber tape core wire and the like that can suppress an increase in loss when using optical fibers that experience a relatively larger increase in transmission loss when being bent.

### BRIEF DESCRIPTION OF DRAWINGS

FIG. 1 is a cross-sectional view of an optical fiber cable 1.
FIG. 2A is a perspective view showing an optical fiber tape core wire 3.
FIG. 2B is a plan view showing the optical fiber tape core wire 3.
FIG. 3A is an enlarged view of a coupling part 19.
FIG. 3B is a cross-sectional view taken along A-A line in FIG. 2B.
FIG. 4A is a plan view showing an optical fiber tape core wire 3a.
FIG. 4B is an enlarged view of the coupling part 19.
FIG. 5 is a plan view showing an optical fiber tape core wire 3b.

### DESCRIPTION OF SOME EMBODIMENTS

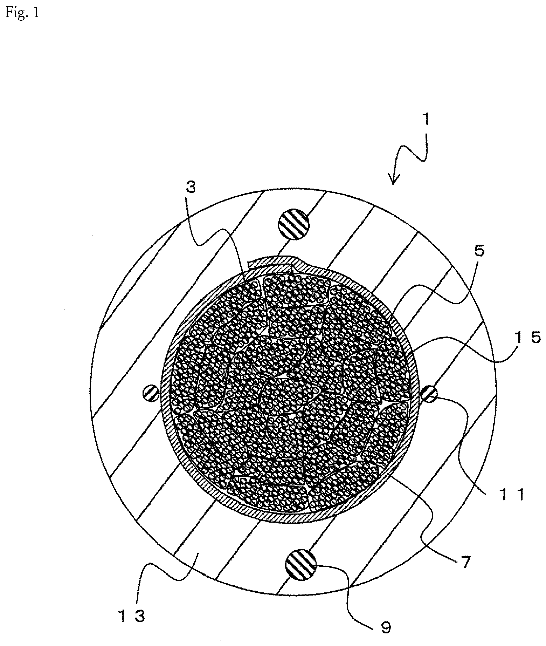

Hereinafter, an embodiment of the present invention will be described with reference to the accompanying drawings. FIG. 1 is a cross-sectional view of an optical fiber cable 1. The optical fiber cable 1 is a central-core-type cable without slotted rods. The optical fiber cable 1 includes a strength member 9, an outer sheath 13, and a cable core 15.

The cable core 15 is formed of a plurality of optical fiber units 5 that are twisted together. Also, the optical fiber unit 5 is formed of a plurality of optical fiber tape core wires 3 that are twisted together. The optical fiber tape core wire 3 is an intermittently-bonded optical fiber tape core wire, which is bonded intermittently in a longitudinal direction. The optical fiber tape core wire 3 will be described in detail below.

A presser winding 7 is provided on an outer periphery of the plurality of optical fiber tape core wires 3. The presser winding 7 is a tape-like member or a non-woven cloth that is arranged lengthwise, for example, collectively covering the outer periphery of the plurality of optical fiber tape core wires 3. That is, the presser winding 7 is disposed lengthwise on the outer periphery of the plurality of optical fiber tape core wires 3 such that a longitudinal direction of the presser winding 7 substantially corresponds with an axial direction of the optical fiber cable 1 and a width direction of the presser winding 7 substantially corresponds with a circumferential direction of the optical fiber cable 1. Note that the cable core 15 includes the presser winding 7 that is wrapped around the plurality of optical fiber tape core wires 3.

On a cross section taken perpendicularly to the longitudinal direction of the optical fiber cable 1, the strength members 9 are provided on both sides of the cable core 15. That is, a pair of the strength members 9 are provided at positions facing each other with the cable core 15 interposed therebetween. In addition, the rip cords 11 are provided in a direction substantially perpendicular to the facing direction of the strength members 9, facing each other with the cable core 15 interposed therebetween.

The outer sheath 13 is provided on an outer periphery of the cable core 15. The strength members 9 and the rip cords 11 are embedded in the outer sheath 13. That is, the outer sheath 13 is provided so as to cover the cable core 15, the tension members 9, and so on. An outer shape of the outer sheath 13 is substantially a circle. The outer sheath 13 is made of polyolefin resin, for example.

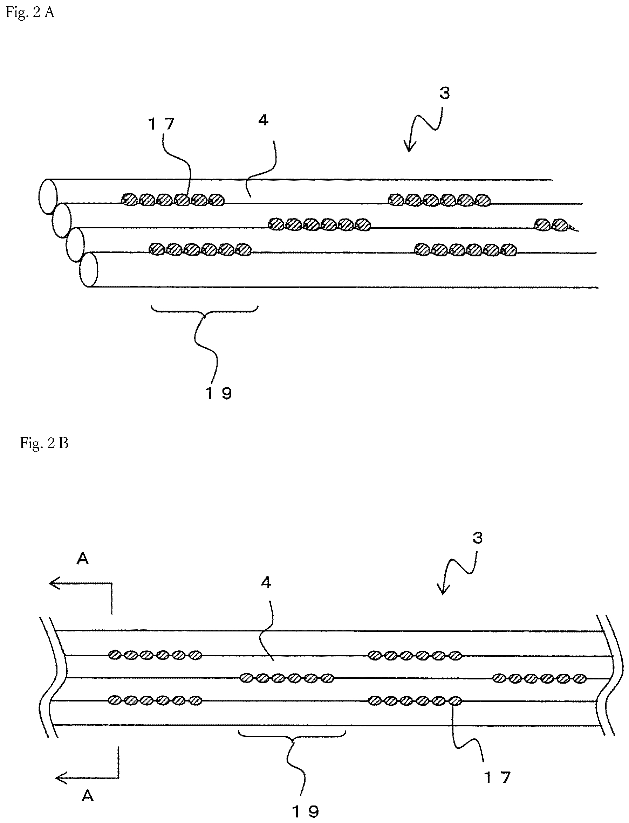

FIG. 2A is a perspective view and FIG. 2B is a plan view showing the intermittently-bonded optical fiber tape core wire 3. The optical fiber tape core wire 3 includes a plurality of single-core optical fibers 4 that are coupled to each other while being arranged side by side. For example, as described in Patent Document 2, application holes are formed on a roller applicator and bonding resin is pushed out from an inner part of the roller applicator so that the optical fibers 4, which are arranged side by side, of the optical fiber tape core wire 3 are bonded from an upper surface of the optical fibers 4 into spaces between the optical fibers 4 at predetermined intervals. The number of optical fibers forming the optical fiber tape core wire 3 is not limited to the illustrated examples.

The optical fibers 4 that are adjacent to each other are intermittently bonded to each other at coupling parts 19 at the predetermined intervals in a longitudinal direction of the optical fiber tape core wire 3. Also, the coupling parts 19 that are adjacent to each other in a width direction are preferably disposed being displaced from one another in the longitudinal direction of the optical fiber tape core wire 3. For example, it is preferable that the coupling parts 19 that are adjacent to each other are formed so as to be displaced a half pitch from one another in the longitudinal direction of the optical fiber tape core wire 3. The length and pitch of the coupling parts 19 are not limited to the illustrated examples.

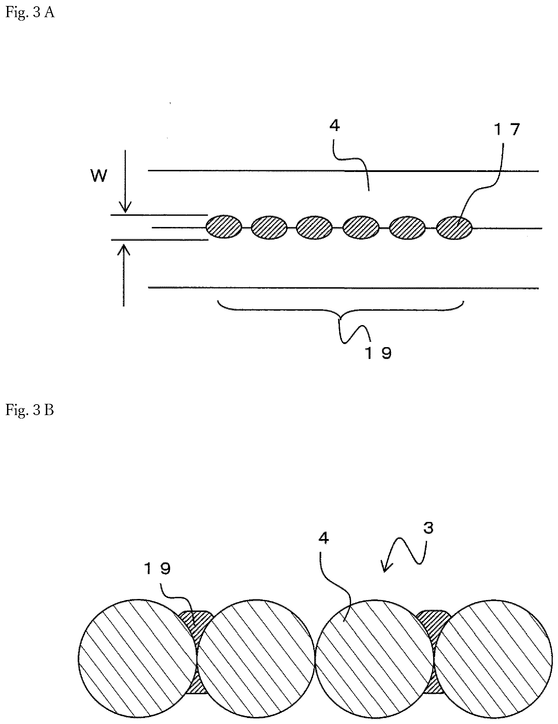

FIG. 3A is an enlarged view of vicinity of the coupling part 19. The coupling part 19 includes a plurality of small bonding portions 17. The small bonding portions 17 are formed intermittently as dots, for example, with a predetermined pitch in the longitudinal direction of the optical fiber tape core wire 3, thereby having periodicity.

A bonding length of each of the small bonding portions 17 in the longitudinal direction of the optical fiber tape core wire 3 is less than the pitch of the small bonding portions 17 within the coupling part 19. Thus, the small bonding portions 17 are separated from one another in the longitudinal direction of the optical fibers 4, and a non-bonded portion is formed between the small bonding portions 17. That is, in the optical fiber tape core wire 3, the adjacent optical fibers 4 are intermittently coupled in the longitudinal direction by the coupling parts 19, and amounts of resin of the coupling parts 19 are not uniform in the longitudinal direction of the optical fibers 4. That is, the amounts of resin at the coupling parts 19 are periodical but not uniform in the longitudinal direction of the optical fibers 4.

FIG. 3B is a cross-sectional view taken along A-A line in FIG. 2B. At the coupling parts 19, the adjacent optical fibers 4 are coupled to each other with resin from both upper and lower surfaces of the optical fiber tape core wire 3. At this time, at the coupling part 19, an amount of applied resin on an upper surface side of the optical fiber tape core wire 3 is different from an amount of applied resin on a lower surface side of the optical fiber tape core wire 3. That is, the amounts of resin at the coupling parts 19 are not only uneven along the longitudinal direction of the optical fibers 4 by parts but also uneven in regard to the upper and lower surfaces of the optical fiber tape core wire 3.

The resin forming the coupling part 19 is ultraviolet curable resin, for example. Also, Young's modulus of the resin of the coupling parts of the resin forming the coupling parts 19 is preferably 130 MPa or less, or more preferably 80 MPa or less. IfYoung's modulus of the resin is too high, rigidity of the coupling part 19 increases, which increases stress applied to the optical fibers 4 when the resin contracts.

On the other hand, if Young's modulus of the resin forming the coupling parts 19 is low, the coupling parts 19 themselves can easily deform, thereby suppressing the stress applied to the optical fibers 4 low. However, ifYoung's modulus of the resin forming the coupling parts 19 is too low, the coupling part 19 (the small bonding portions 17) may crack. Thus, Young's modulus of the resin forming the coupling part 19 is preferably 40 MPa or more.

As described above, according to the present embodiment, Young's modulus of the resin forming the coupling part 19 is equal to or less than a predetermined value. Thus, it is possible to reduce influence to the optical fibers 4 of the unevenness of an amount of contraction of the resin by the parts in the longitudinal direction or by the upper and lower surfaces of the coupling parts 19. For this reason, it is possible to suppress an increase in transmission loss when low-priced optical fibers 4 are used.

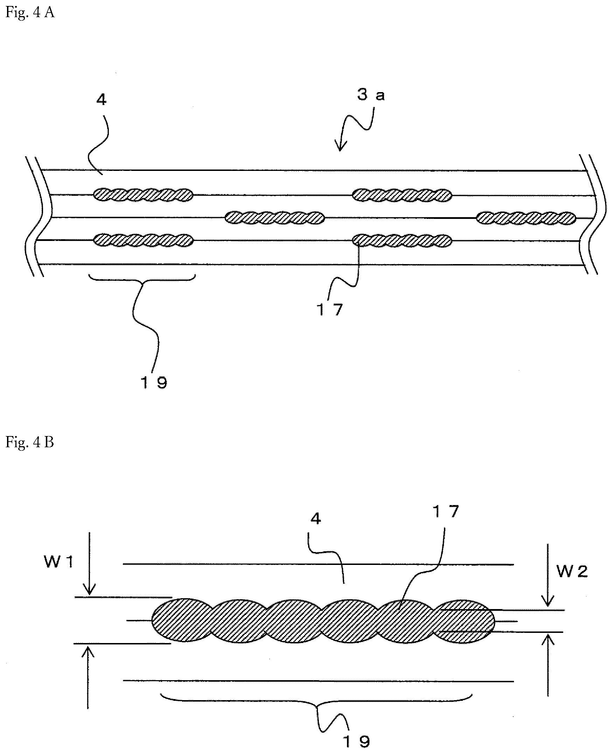

Although an example in which the small bonding portions 17 are disposed intermittently in the longitudinal direction of the coupling parts 19 is shown in the above embodiment, the small bonding portions 17 may be disposed in other ways. For example, as in an optical fiber tape core wire 3a shown in FIG. 4A, the plurality of small bonding portions 17 may be continuously joined together at the coupling part 19. That is, also in such the case, although the amounts of resin at the coupling parts 19 are different and uneven in the longitudinal direction of the optical fibers 4 as shown in detail in FIG. 4B, the parts with the large amounts of resin and the parts with the small amounts of resin are periodical. Such the coupling part 19 may be obtained by applying adhesive in a form of the continuously joined plurality of small bonding portions 17, for example. Or, such the coupling part 19 may be obtained by flow of the adhesive by controlling viscosity of the adhesive, intervals of application of the small bonding portions 17, time taken between application and curing, and conditions of start timing for curing, so that the small bonding portions 17 are joined together and cured before the small bonding portions 17 flow into a shape having a perfectly uniform width. For such the optical fiber tape core wire 3, the amounts of resin of the coupling parts 19 are uneven in the longitudinal direction of the optical fibers 4. Nevertheless, ifYoung's modulus of the resin forming the coupling parts 19 is low, the coupling parts 19 themselves deform easily and thus the stress applied to the optical fibers 4 can be suppressed low.

Such the optical fiber tape core wire 3a can be manufactured by a method similar to the method for manufacturing the above-mentioned optical fiber tape core wire 3. For example, the shape of the application holes formed on the roller applicator may be changed. Alternatively, the roller applicator having a plurality of small holes may be used to increase the amount of applied resin such that the adjacent small bonding portions 17 are joined together.

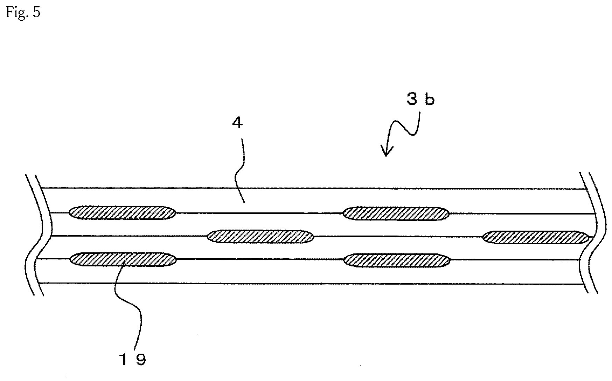

Also, for the coupling part 19, it is not always necessary to apply the resin to form the plurality of separate or continuous small bonding portions 17. For example, as in an optical fiber tape core wire 3b shown in FIG. 5, instead of being formed of the plurality of small bonding portions 17, the coupling part 19 may be formed in a shape having a substantially uniform width. Also in such the case, the width of the coupling part 19 becomes smaller at front and rear ends of the coupling part 19 and the amounts of resin of the coupling parts 19 are uneven in the longitudinal direction of the optical fibers 4. However, with low Young's modulus of the resin forming the coupling part 19, deformation of the coupling parts 19 themselves is easy, thereby suppressing the stress applied to the optical fibers 4 low.

For the optical fibers 4, although fibers having a core diameter of approximately 250 µm are commonly used, fibers having a core diameter of 200 µm may also be used. Such the optical fibers 4 having an outer diameter of 200 µm is often obtained by thinning a coating layer of the optical fiber having a core diameter of approximately 250 µm to have the outer diameter of 200 µm. By thinning the coating layer in this way, the optical fiber can be easily bent into a smaller diameter than the optical fiber having a core diameter of 250 µm. However, with low Young's modulus of the resin forming the coupling part 19, deformation of the coupling parts 19 themselves is easy, thereby suppressing the stress applied to the optical fibers 4 low.

Also, as denser the optical fibers are packed, such as 3456 cores or even 6912 cores, the influence of the stress applied to the optical fibers 4 from the coupling parts 19 may increase. At this time, with low Young's modulus of the resin forming the coupling part 19, deformation of the coupling parts 19 themselves is easy, thereby suppressing the stress applied to the optical fibers 4 low.

### WORKING EXAMPLES

A plurality of intermittently-bonded optical fiber tape core wires are produced, and their maximum transmission losses and cracks of the coupling parts are evaluated. Two types of optical fibers are used to form the optical fiber tape core wires.

For the optical fibers that experience a small increase in transmission loss due to stress, optical fibers categorized in ITU-T G.657 are used. The optical fiber categorized in ITU-T G.657 is formed by coloring an optical fiber bare wire having a diameter of 245 µm, and is a colored fiber having a mode field diameter of 8.6 µm and a diameter of 255 µm.

In comparison, optical fibers categorized in ITU-T G.654.E (Terawave ULL fibers by OFS) are used. The optical fiber categorized in ITU-T G.654 is formed by coloring an optical fiber bare wire having a diameter of 245 µm, and is a colored fiber having a mode field diameter of 12.4 µm and a diameter of 255 µm.

Eight of the colored fibers are bonded intermittently to produce an eight-core intermittently-bonded optical fiber tape core wire. The optical fiber tape core wire is produced by applying bonding resin with a roller applicator as described in above-mentioned Patent Document 2.

For discharge holes on the roller applicator, each hole has a diameter of 0.3 mm and a pitch of the holes is 0.4 mm. Also, by adjusting the amount of resin, when viewed from the upper surface of the optical fiber tape core wire onto which the bonding resin is applied, the one with the small bonding portions that are separated from one another (see FIG. 2B) and the one with the small bonding portions that are continuous (see FIG. 4A) are produced.

For the separated small bonding portions, the maximum width of the applied resin (W in FIG. 3A) is approximately 0.15 mm. On the other hand, for the continuous small bonding portions that are adj acent to each other in the longitudinal direction, the maximum width of the applied resin (W1 in FIG. 4B) is approximately 0.2 mm and a width of a part where the adjacent applied resin are joined (W2 in FIG. 4B) is approximately 0.12 mm.

The level of Young's modulus of the bonding resin to bond the optical fibers is varied and the eight-core optical fiber tape core wires corresponding to each Young's modulus are produced. Young's modulus is measured as follows.

First, a glass plate of 10 centimeters square is placed on a spin coater and, by controlling its rotation speed, an original ingredient is spread and applied onto the glass plate to be approximately 5 to 10 µm. The glass plate is then placed inside a purge box in which a nitrogen atmosphere is created, irradiated with ultraviolet light using an ultraviolet lamp with the iluminance of 1000 mW/cm² and irradiation dose of 1000 mJ/cm² to form a sheet. The sheet is held in an atmosphere of 25 °C 50 % RH set state for twelve hours, and samples are stamped out so that each sample is in a straight dumbbell shape having 75 mm length and 10 mm width. The obtained sample is pulled with a marked line of 25 mm at a pulling speed of 1 mm/min, and its Young's modulus is calculated from pulling force at 2.5 % distortion.

Ten of the obtained optical fiber tape core wires are twisted together to form an eighty-core optical fiber unit wound by a plastic tape of 2 mm width. Also, 25 of the eighty-core optical fiber units are supplied and twisted together and then attached lengthwise with a water-absorbable non-woven cloth, rolled by a forming tool, which is then wound around by a nylon presser string to form a 2000-core cable core.

The cable core formed as above together with strength members using steel wires of 1.8 mm diameter and rip cords for ripping the outer sheath are sheathed into a cylindrical shape by an outer sheath material to produce an optical fiber cable. The outer sheath material is low density polyethylene (LLDPE), and a thickness of the outer sheath is 3.0 mm.

The minimum diameter of a turning sheave in a pass line through which the optical fiber tape core wire passes at the time of manufacturing the optical fiber unit described above and the minimum diameter of a turning sheave in a pass line through which the optical fiber unit passes at the time of manufacturing the cable core are 100 mm, respectively. Note that smaller the minimum diameter of the turning sheaves makes larger the bending force applied to the optical fiber tape core wire during the manufacturing process, which may cause cracking of the coupling parts.

For each of the obtained optical fiber cables, transmission loss at a wavelength of 1550 nm is measured. Also, the optical fiber tape core wire is taken out of the optical fiber cable to check if there are any cracks in the coupling parts within a 10 meters long optical fiber tape core wire. The one having two or more consecutive cracked coupling parts in a same line in the longitudinal direction is regarded as "Failed". The results are shown in Table 1 and Table 2.

**[Table 1]**

| | Working Example 1 | Working Example 2 | Working Example 3 | Working Example 4 | Working Example 5 | Working Example 6 | Working Example 7 |
|---|---|---|---|---|---|---|---|
| Optical Fiber | G.654.E | G.654.E | G.654.E | G.654.E | G.654.E | G.654.E | G.654.E |
| Shape of Small Bonding Portions | Continuou s | Continuou s | Continuou s | Separate d | Separate d | Separate d | Continuou s |
| Young's Modulus of Bonding Resin (MPa) | 41 | 77 | 128 | 41 | 77 | 128 | 55 |
| Maximum Transmissio n Loss of 0.27dB/km or more | None | None | None | None | None | None | None |
| Maximum Transmissio n Loss of 0.23dB/km or more | None | None | Exist | None | None | Exist | None |
| Two Consecutive Cracks of Coupling Parts | None | None | None | None | None | None | None |

**[Table 2]**

| | Comparativ e Example 1 | Comparativ e Example 2 | Comparativ e Example 3 | Comparativ e Example 4 | Comparativ e Example 5 | Comparativ e Example 6 |
|---|---|---|---|---|---|---|
| Optical Fiber | G.654.E | G.654.E | G.654.E | G.654.E | G.657 | G.657 |
| Shape of Small Bonding Portions | Continuous | Separated | Continuous | Separated | Continuous | Separated |
| Young's Modulus of Bonding Resin (MPa) | 30 | 30 | 155 | 155 | 155 | 155 |
| Maximum Transmissio n Loss 0.27dB/km or more | None | None | Exist | Exist | None | None |
| Maximum Transmissio n Loss of 0.23dB/km or more | None | None | Exist | Exist | None | None |
| Two Consecutive Cracks of Coupling Parts | Exist | Exist | None | None | None | None |

In any of Working Examples 1 to 7, there is no two-consecutive cracks of the bonding resin, and the maximum transmission loss is less than 0.27 dB/km even when the optical fibers categorized in ITU-T G. 654.E, which experience a large increase in transmission loss when being bent, are used. In particular, in Working Examples 1, 2, 4, 5, and 7 where Young's modulus of the bonding resin is 80 MPa or less (41 MPa, 55 MPa, and 77 MPa), the maximum transmission loss is less than 0.23 dB/km.

On the other hand, two consecutive cracks of the bonding resin occur in Comparative Examples 1 and 2 in which Young's modulus of the bonding resin is less than 40 MPa. Also, in Comparative Examples 3 and 4, although there is no two-consecutive cracks of the bonding resin, Young's modulus of the bonding resin is more than 130 MPa and thus the maximum transmission loss is 0.27 dB/km or more. Note that for the optical fibers categorized in ITU-T G.657, the maximum transmission loss is less than 0.23 dB/km even if the Young's modulus of the bonding resin is more than 130 MPa.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### DESCRIPTION OF NOTATIONS

- 1: optical fiber cable
- 3, 3a, 3b: optical fiber tape core wire
- 4: optical fiber
- 5: optical fiber unit
- 7: presser winding
- 9: strength member
- 11: rip cord
- 13: outer sheath
- 15: cable core
- 17: small bonding portion
- 19: coupling part

## Claims

1. An optical fiber tape core wire comprising:
a plurality of optical fibers that are arranged side by side and coupled to each other, wherein
the plurality of optical fibers adjacent to each other are intermittently coupled by coupling parts in a longitudinal direction;
amounts of resin of the coupling parts are not uniform in a longitudinal direction of the plurality of optical fibers; and
Young's modulus of the resin of the coupling parts is 130 MPa or less.

2. The optical fiber tape core wire according to claim 1, wherein
Young's modulus of the resin of the coupling parts is 80 MPa or less.

3. The optical fiber tape core wire according to claim 1, wherein
the optical fibers adjacent to each other are coupled at the coupling parts with the resin from both upper and lower surfaces of the optical fiber tape core wire.

4. The optical fiber tape core wire according to claim 3, wherein
the amounts of the resin on the upper and lower surfaces of the optical fiber tape core wire are formed unevenly at the coupling parts.

5. The optical fiber tape core wire according to claim 1, wherein
the amounts of the resin at the coupling parts are periodical but are uneven in the longitudinal direction of the plurality of optical fibers.

6. The optical fiber tape core wire according to claim 1, wherein
each of the coupling parts includes a plurality of small bonding portions, the plurality of small bonding portions being joined continuously with each other.

7. An optical fiber cable in which the optical fiber tape core wire according to any of claims 1 to 6 is used, the optical fiber cable comprising:
a cable core formed of a plurality of the optical fiber tape core wires that are twisted together; and
an outer sheath that is provided to coat the cable core.

8. The optical fiber cable according to claim 7, wherein
a maximum transmission loss at a wavelength of 1550 nm is less than 0.27 dB/km.

9. The optical fiber cable according to claim 7, wherein
the plurality of optical fibers are categorized in ITU-T G.654.E.
